(19) Europäisches Patentamt
European Patent Office
Office européen des brevets

(11) **EP 1 189 357 A1**

(12) **EUROPEAN PATENT APPLICATION**

(43) Date of publication:
**20.03.2002 Bulletin 2002/12**

(51) Int Cl.[7]: **H04B 1/707**, H04L 7/04

(21) Application number: **01303122.4**

(22) Date of filing: **02.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **19.09.2000 US 665511**

(71) Applicant: **LUCENT TECHNOLOGIES INC.**
**Murray Hill, New Jersey 07974-0636 (US)**

(72) Inventors:
 • **Lee, Jung Ah**
 **Pittstown, New Jersey 08867 (US)**

 • **Wood, Steven Andrew**
 **Bristol (GB)**
 • **Wroclawski, Gregory J.**
 **Kinnelon, New Jersey 07405 (US)**
 • **Wynn, Woodson Dale**
 **Basking Ridge, New Jersey 07920 (US)**

(74) Representative:
 **Buckley, Christopher Simon Thirsk et al**
 **Lucent Technologies (UK) Ltd,**
 **5 Mornington Road**
 **Woodford Green, Essex IG8 0TU (GB)**

(54) **Segmented correlator architecture for signal detection in fading channels**

(57) Signals with known sequences are detected in a fast fading environment using a segmented correlator architecture. The incoming stream of samples or data is segmented into blocks that are individually correlated with segments of the known or expected sequence. The output of the individual correlations are summed to form a summation of the correlator's outputs. An absolute value of the summation is compared to a threshold to determine when a known input sequence has been detected. Segmenting the input sequence and separately correlating the segments, decreases the effect of signal decorrelation on the entire sequence.

FIG. 2

## Description

## Related Application

Related subject matter is disclosed in the following application filed concurrently herewith: U.S. Patent Application entitled "Segmented Architecture For Multiple Sequence Detection And Identification In Fading Channels", Serial No. _.

## Background of the Invention

## 1. Field of the Invention

The present invention relates to communications; more specifically, wireless communications.

## 2. Description of the Related Art

Wireless communications involve creating a voice or data communication channel between a mobile communication station and a base station. Setting up the communication channel typically involves the mobile station transmitting a known sequence, such as a sequence containing a series of symbols, on an access channel that is monitored by the base station. The base station detects the known sequence and uses it for functions such as estimating the roundtrip delay between the mobile station and base station.

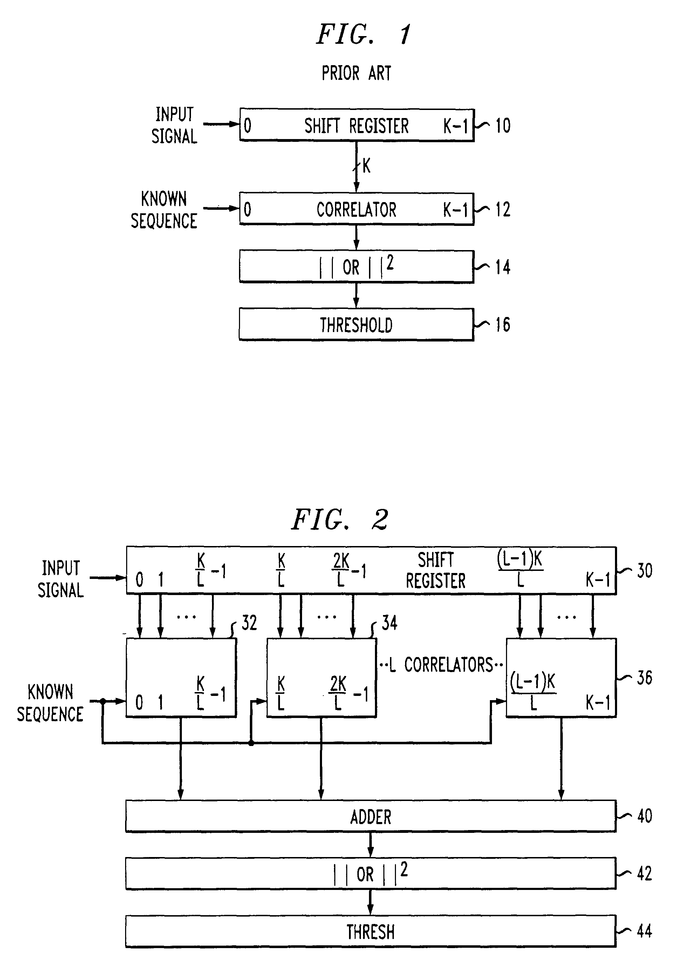

In order to detect a known or expected sequence received by the base station from a mobile station, a signal detector such as the detector of FIG. 1 is implemented. The signal detector comprises shift register 10 which receives samples or data representative of the sequence that was transmitted by the mobile station and received by the base station. Connected in parallel to the shift register is correlator 12 which contains a replica of the known or expected sequence. As the data is received by the shift register, the data is shifted to the right as the correlator compares the known sequence stored in the correlator with the data or samples being shifted by the shift register. After each shift, the output of the correlator is supplied to absolute value generator 14. The absolute value generator generates the absolute value of the output of the correlator and passes it to threshold circuit 16. It should be noted that the absolute value generator may also generate the square of the absolute value received from the correlator. The threshold circuit compares the output of the absolute value generator with the threshold to determine when there is a match or near match between the data shifted through the shift register and the known sequence in the correlator. When the output of the absolute value generator exceeds the threshold, the sequence is detected.

It should be noted that the base station attempts to detect the sequence over a period of time referred to as a search window. A search window is typically N times the sampling period of the received sequence. Once shift register 10 is filled with an initial set of samples, it shifts in new samples and shifts out older samples N-1 times. This results in N attempts to detect the expected sequence over a search window that is equal to N times the time period between samples provided to shift register 10. A detected sequence's position in the search window is determined by the number of shifts made by shift register 10 when the correlator's output exceeds the threshold. The detected sequence's position in the search window is a measure of the round trip delay between the mobile station and the base station.

When the mobile station is in a fast moving motor vehicle or train, the signal supplied to the shift register is subjected to fast fading which introduces phase distortion. As a result, the incoming signal or sequence is decorrelated and produces a low correlator output when correlated with the expected sequence. The low correlator output does not exceed the detection threshold, and results in a failure to detect the received sequence.

## Summary of the Invention

The present invention provides detection of known sequences in a fast fading environment using a segmented correlator architecture. The incoming stream of samples or data is segmented into blocks that are individually correlated with segments of the known or expected sequence. The output of the individual correlations are summed to form a summation of the correlator's outputs. An absolute value of the summation is compared to a threshold to determine when a known input sequence has been detected. Segmenting the input sequence and separately correlating the segments, decreases the effect of signal decorrelation on the entire sequence.

## Brief Description of the Drawings

FIG. 1 illustrates a prior art signal detection architecture;
FIG. 2 illustrates a segmented correlator architecture;
FIG. 3 illustrates a segmented correlator architecture used for both fast fading and less severe fading environments;
FIG. 4 illustrates a time-multiplexed segmented correlator architecture; and
FIG. 5 is a flowchart of signal detection using a time-multiplexed segmented correlator architecture.

## Detailed Description of the Invention

FIG. 2 illustrates a functional block diagram of a signal detector using a segmented correlator architecture. Input signals or sequences are received by a base station and samples or data representing the input signals are shifted through input shift register 30. After the initial K samples have been shifted into shift resister 30, the outputs of the shift register are provided to correlators 32, 34 and 36. This results in segmenting the K sample into blocks that are individually correlated. The blocks may comprise sequential samples or non-sequential samples from shift register 30. It should be noted that only three correlators are shown in the figure, but any number of correlators may be used. In one embodiment, if the set of samples representing the input signal is K bits long and there are L symbols in the sequence to be detected, L correlators may be used where each correlator has $\frac{K}{L}$ taps. As a result, correlator 32 receives bit 0 through $\frac{K}{L}$-1 from shift register 30; correlator 34 receives bit $\frac{K}{L}$ through $\frac{2K}{L}$-1 from shift register 30; and correlator 36 receives bit $\frac{(L-1)K}{L}$ through (K-1) from shift register 30. For example, if the input shift register stores 4,096 samples (K=4,096) and there are 16 symbols in the sequence to be detected, 16 correlators (L=16) of 256 taps each may be used. As the input data stream is shifted through input shift register 30, each of the correlators correlates the data provided by the shift register with a segment of a known or expected sequence and thereby produces an output to adder 40. Adder 40 adds the outputs of the correlators and provides the sum to absolute value generator 42. Absolute value generator 42 generates the absolute value or, in another embodiment, the square of the absolute value. The output of absolute value generator is provided to thresholder 44. Thresholder 44 is used to compare the output from absolute value generator 42 to a predefined threshold to determine whether the sequence contained in input shift register 30 matches or nearly matches the known sequence as represented by segments of the known sequence stored as coefficients in correlators 32 through 36. A known signal or sequence is detected when the output of absolute value generator 42 exceeds the predetermined threshold.

The input data is shifted through input shift register 30 and examined to attempt detection of the known or expected sequence until a search window of N input signal sample periods has been examined. This is accomplished by examining the initial K samples of the input signal and then examining each of the following N-1 new sets of K samples. A new set of K samples is produced each time shift register 30 shifts in a new input signal sample and shifts out the oldest sample. A detected sequence's position in the search window is determined by the number of shifts made by shift register 30 when absolute value generator 42's output exceeds the predetermined threshold.

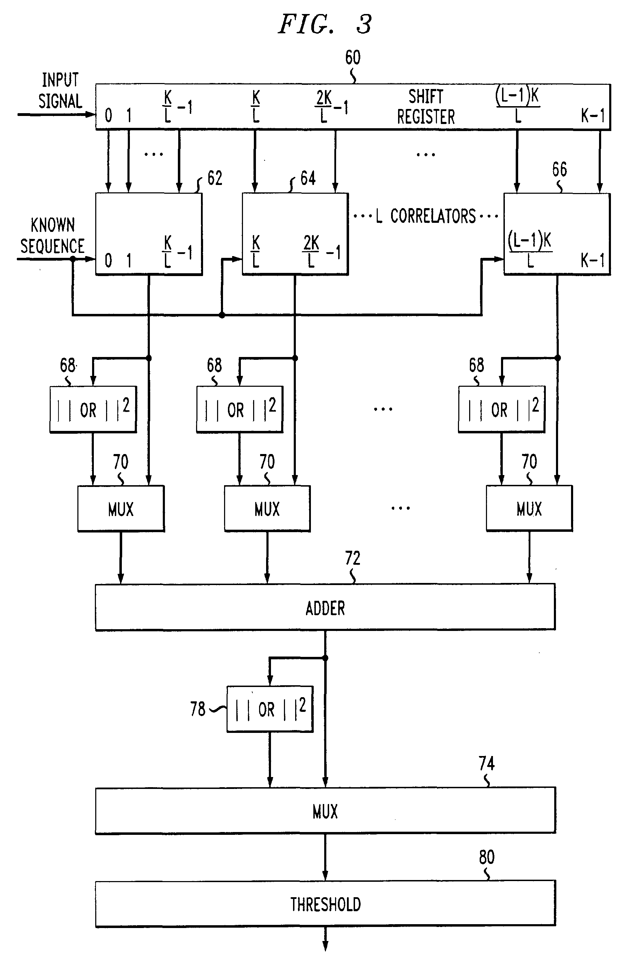

FIG. 3 illustrates a functional block diagram of a signal detector using segmented correlators for both fast fading and less severe fading environments. Input shift register 60 receives samples of the input signal and shifts from left to right. The output of shift register 60 is provided to correlators 62 through 66. The correlators have coefficients representative of segments of the known or expected input sequence. The outputs of each of the correlators are provided to both absolute value generator 68 and multiplexer 70. As discussed above, absolute value generators 68 generate the absolute value or the square of the absolute value of the output of a correlator output and provide the result to multiplexer 70. Multiplexer 70 is used to choose between the output of the correlator or the output of the absolute value generator. When performing signal detection in less severe fading environments, that is, when the input signal is expected to have slow fading, multiplexer 70 is set to select the output of the correlator directly. In an environment where the input signal is expected to have fast fading, multiplexer 70 is set to select the output of absolute value generator 68. The output of each multiplexer 70 is provided to adder 72 which adds the outputs of all the multiplexers. The output of adder 72 is provided to both multiplexer 74 and absolute value generator 78. In a less severe fading environment, multiplexer 74 is set to select the output of absolute value generator 78 and to provide that output to thresholder 80. In a fast fading environment, multiplexer 74 is set to directly provide the output of adder 72 to thresholder 80. As discussed above, thresholder 80 is used to compare the result provided by multiplexer 74 to a known threshold to determine if the known or expected sequence has been detected.

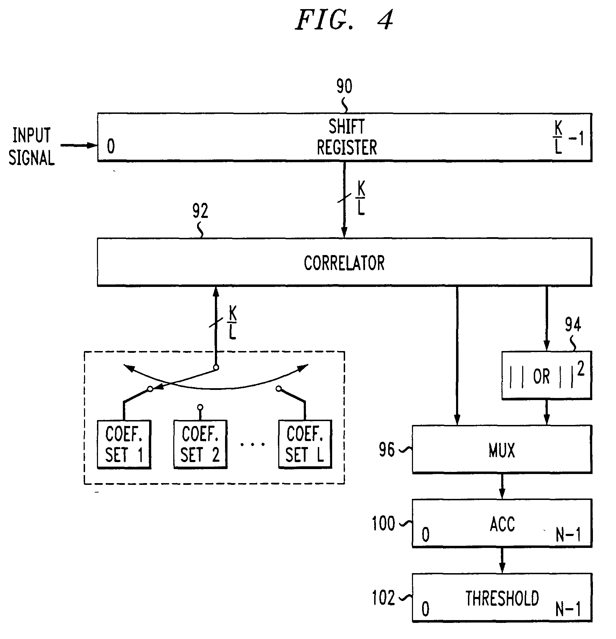

FIG. 4 illustrates a detector architecture using a time-multiplexed segmented correlation architecture. In this example, the search window is N sample periods long and N is less than or equal to $\frac{K}{L}$. The input sequence of K samples is segmented into L segments of length $\frac{K}{L}$. Input shift register 90 shifts the data from left to right N-1 times for each segment and thereby provides N sets of $\frac{K}{L}$ samples to correlator 92. This results in correlator 92 producing N outputs for each segment. In this example, since there are L different segments, L different sets of coefficients are provided to correlator 92, where each set of coefficients is representative of a different expected sequence segment. When the first segment is provided to correlator 92, the first set of $\frac{K}{L}$ coefficients is also provided to the correlator. In a similar fashion, when the second segment of $\frac{K}{L}$ samples is provided to correlator 92, the second set of $\frac{K}{L}$ coefficients is provided to the correlator. This process continues until the last or L$^{th}$ segment of samples is provided to correlator 92. For each segment, the N different outputs of correlator 92 are provided to both absolute value generator 94 and multiplexer 96. As discussed earlier, absolute value generator 94 may take the absolute value or the square of the absolute value of the output of correlator 92. When performing signal detection in a fast fading environment, multiplexer 96 selects the output of absolute value generator 94 and provides it to accumulator 100. In a less severe fading environment, multiplexer 96 selects the output of correlator 92 and provides it to accumulator 100. For each segment, N separate accumulations are produced and stored, where each of the N accumulations is associated with a different position in the search window. As a result, if the input data stream is broken into L segments, accumulator 100 accumulates L values in each of the separate N accumulations. After L values have been accumulated in each of the N accumulations, the output of accumulator 100 is provided to thresholder 102 where it is determined whether any of the N accumulations have crossed a threshold indicating that a known sequence has been detected. A detected sequenc's position in the search window is indicated by which of the N accumulations exceeded the threshold. After accumulation is completed for the L segments and after all N accumulations have been compared to a threshold, accumulator 100 and shift register 90 are cleared and the process is repeated at the beginning of the next signal reception period.

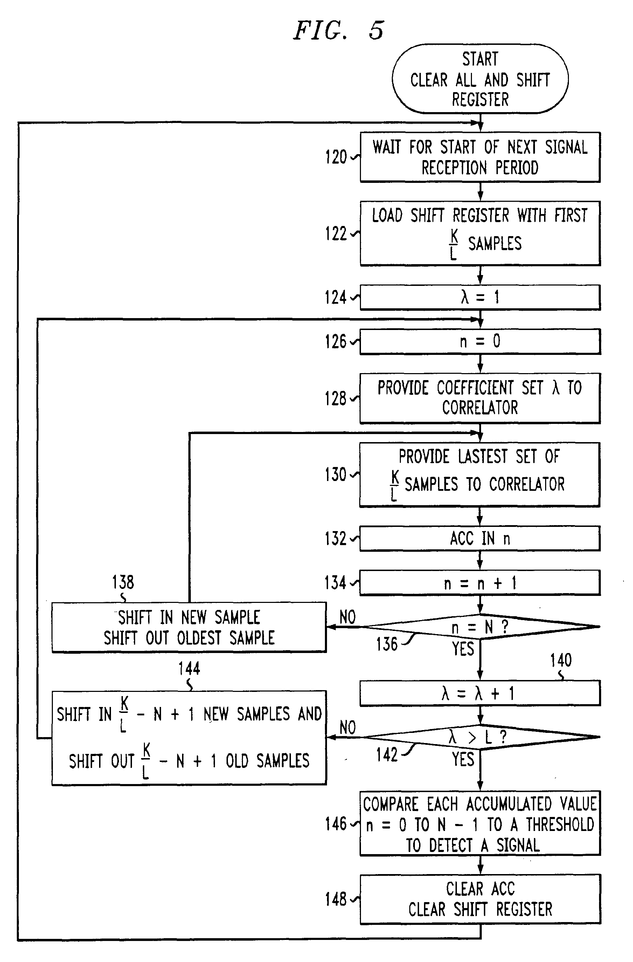

FIG. 5 is a flowchart illustrating how signal detection is accomplished using the time-multiplexed segmented correlator architecture of FIG. 4. Initially, accumulator 100 and shift register 90 are cleared. In step 120, the process waits for the start of the next signal reception period of the base station. When the signal reception period begins, step 122 is executed where shift register 90 is loaded with the first $\frac{K}{L}$ samples of the input signal. In step 124, index $\lambda$ is set equal to 1 and in step 126, index n is set equal to 0. In step 128, coefficient set $\lambda$ is provided to correlator 92. In step 130, the latest set of $\frac{K}{L}$ samples from shift register 90 is provided to correlator 92. After the resulting output from correlator 92 is provided to absolute value generator 94 and multiplexer 96, the output of multiplexer 96 is provided to accumulator 100, where in step 132 the result is added to accumulation n. In step 134, index n is set equal to n+1. In step 136 it is determined whether index n is equal to N which is the number of sample periods in the search window. If index n is less than N, step 138 is executed where a new sample of the input signal is shifted into shift register 90 while the oldest sample is shifted out of the shift register. After step 138, step 130 is executed where the latest set of $\frac{K}{L}$ samples from shift register 90 is provided to correlator 92. This process continues until N sets of $\frac{K}{L}$ samples have been examined and until each result has been stored in its corresponding n accumulation in accumulator 100. When N sets of input samples have been evaluated, step 136 determines that n=N and step 140 is executed. In step 140, index $\lambda$ is set equal to $\lambda$+1. In step 142, it is determined whether index $\lambda$ is greater than L. If index $\lambda$ is not greater than L, step 144 is executed to provide shift register 90 with the next segment for examination. In step 144, $\frac{K}{L}$ - N+1 new samples of the input signal are shifted into shift register 90 while $\frac{K}{L}$ - N+1 old samples are shifted out of the shift register. After step 144, step 126 is executed where index n is set equal to 0, and step 128 is executed where correlator 92 is provided with the next set of coefficients to be used. As with the prior segment, N sets of $\frac{K}{L}$ samples are ex-

amined to produce N outputs that are accumulated in the N separate accumulations in accumulator 100. Returning to step 142, if it is determined that $\lambda$ is greater than L, step 146 is executed. Since index $\lambda$ is greater than L, all of the segments associated with the input signal have been examined. In step 146, each of the N accumulation of L values in accumulator 100 is compared to a predefined threshold in thresholder 102 to determine if a known signal or sequence has been detected. The particular accumulation n (where n may equal 0 to N-1), that exceeds the threshold determines the detected signal's position in the search window. After step 146, step 148 is executed where accumulator 100 and shift register 90 are cleared, and then step 120 is executed where the process once again waits for the beginning of the next signal reception period of the base station.

It should be noted that the architectures illustrated in FIGS. 2 through 4 may be carried out in individual circuits associated with each block, an Application Specific Integrated Circuit (ASIC) or a general purpose processor such as digital signal processor (DSP) that performs the functions illustrated by the block diagrams.

**Claims**

1. A method for detecting a signal, **characterized by** the steps of:

    receiving a sequence of samples representing the signal;
    segmenting the sequence of samples to form a plurality of segmented sequences; correlating each of the plurality of segmented sequences with one of a plurality of known sequences to produce a plurality of correlation values;
    summing the plurality of correlation values to produce a total correlation output; and
    comparing the total correlation output with a threshold.

2. The method of claim 1, **characterized in that** the total correlation output is an absolute value of a sum of the plurality of correlation values.

3. The method of claim 1, **characterized in that** the total correlation output is a square of an absolute value of a sum of the plurality of correlation values.

4. A method for detecting a signal, **characterized by** the steps of:

    receiving a sequence of samples representing the signal;
    segmenting the sequence of samples to form a plurality of segmented sequences; correlating each of the plurality of segmented sequences with one of a plurality of known sequences to produce a plurality of correlation values; taking absolute values of the correlation values to produce absolute value outputs; summing the plurality of absolute value outputs to produce a sum; selecting one of the sum and an absolute value of the sum to produce a selected output; and comparing the selected output with a threshold.

5. The method of claim 5, **characterized in that** the step of taking an absolute value comprises squaring the absolute value of the correlation sum to produce the absolute value output.

## FIG. 1

PRIOR ART

INPUT SIGNAL → | 0    SHIFT REGISTER    K−1 | ~ 10

↓ $K$

KNOWN SEQUENCE → | 0    CORRELATOR    K−1 | ~ 12

| $||$ OR $||^2$ | ~ 14

| THRESHOLD | ~ 16

## FIG. 2

INPUT SIGNAL → | 0   1   $\frac{K}{L}-1$   $\frac{K}{L}$   $\frac{2K}{L}-1$   SHIFT REGISTER   $\frac{(L-1)K}{L}$   K−1 | ~ 30

32    34    ···L CORRELATORS···    36

KNOWN SEQUENCE → | 0   1   $\frac{K}{L}-1$ |   | $\frac{K}{L}$   $\frac{2K}{L}-1$ |   | $\frac{(L-1)K}{L}$   K−1 |

| ADDER | ~ 40

| $||$ OR $||^2$ | ~ 42

| THRESH | ~ 44

## FIG. 3

*FIG. 4*

90

| | SHIFT REGISTER | |
|---|---|---|
| INPUT SIGNAL → 0 | | $\frac{K}{L} - 1$ |

$\frac{K}{L}$

92

CORRELATOR

$\frac{K}{L}$

$\frac{K}{L}$

| COEF. SET 1 | COEF. SET 2 | . . . | COEF. SET L |

94

$|\ |\ OR\ |\ |^2$

96 — MUX

| 100 | 0 | ACC | N−1 |

| 102 | 0 | THRESHOLD | N−1 |

## FIG. 5

START
CLEAR ALL AND SHIFT
REGISTER

120 — WAIT FOR START OF NEXT SIGNAL RECEPTION PERIOD

122 — LOAD SHIFT REGISTER WITH FIRST $\frac{K}{L}$ SAMPLES

124 — $\lambda = 1$

126 — $n = 0$

128 — PROVIDE COEFFICIENT SET $\lambda$ TO CORRELATOR

130 — PROVIDE LASTEST SET OF $\frac{K}{L}$ SAMPLES TO CORRELATOR

132 — ACC IN n

134 — $n = n + 1$

138
SHIFT IN NEW SAMPLE
SHIFT OUT OLDEST SAMPLE

NO ← 136 — $n = N$ ? YES

144
SHIFT IN $\frac{K}{L} - N + 1$ NEW SAMPLES AND
SHIFT OUT $\frac{K}{L} - N + 1$ OLD SAMPLES

140
$\lambda = \lambda + 1$

NO ← 142 — $\lambda > L$ ? YES

146 — COMPARE EACH ACCUMULATED VALUE $n = 0$ TO $N - 1$ TO A THRESHOLD TO DETECT A SIGNAL

148 — CLEAR ACC CLEAR SHIFT REGISTER

EP 1 189 357 A1

| | European Patent Office | EUROPEAN SEARCH REPORT | Application Number EP 01 30 3122 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 41846 A (ERICSSON GE MOBILE INC) 19 August 1999 (1999-08-19) * abstract * * page 4, line 10 - line 18 * * page 7, line 14 - line 27; figure 8A * * page 9, line 20 - page 10, line 11 * * page 14, line 14 - line 28 * | 1-5 | H04B1/707 H04L7/04 |
| X | US 5 579 338 A (KOJIMA TOSHIHARU) 26 November 1996 (1996-11-26) * abstract; figure 5 * * column 3, line 54 - column 4, line 33 * * column 6, line 35 - column 7, line 10 * * claim 1 * | 1-5 | |
| A | US 6 028 887 A (HARRISON DANIEL DAVID ET AL) 22 February 2000 (2000-02-22) * column 12, line 5 - line 17; figure 4 * | 1,4 | |
| | | | TECHNICAL FIELDS SEARCHED (Int.Cl.7) H04B H04L |

The present search report has been drawn up for all claims

| Place of search | Date of completion of the search | Examiner |
|---|---|---|
| THE HAGUE | 7 September 2001 | Ó Donnabháin, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

**ANNEX TO THE EUROPEAN SEARCH REPORT
ON EUROPEAN PATENT APPLICATION NO.** EP 01 30 3122

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2001

| Patent document cited in search report | | Publication date | Patent family member(s) | | Publication date |
|---|---|---|---|---|---|
| WO 9941846 | A | 19-08-1999 | AU | 2566599 A | 30-08-1999 |
| | | | CN | 1291383 T | 11-04-2001 |
| | | | EP | 1057280 A | 06-12-2000 |
| | | | US | 2001002919 A | 07-06-2001 |
| US 5579338 | A | 26-11-1996 | JP | 2672769 B | 05-11-1997 |
| | | | JP | 6077932 A | 18-03-1994 |
| US 6028887 | A | 22-02-2000 | AU | 3815797 A | 09-02-1998 |
| | | | CA | 2258692 A | 22-01-1998 |
| | | | EP | 0910805 A | 28-04-1999 |
| | | | JP | 2001508863 T | 03-07-2001 |
| | | | WO | 9802758 A | 22-01-1998 |
| | | | AU | 3739497 A | 09-02-1998 |
| | | | AU | 3814097 A | 09-02-1998 |
| | | | AU | 3814297 A | 09-02-1998 |
| | | | AU | 3815897 A | 09-02-1998 |
| | | | AU | 3896797 A | 09-02-1998 |
| | | | AU | 3965397 A | 09-02-1998 |
| | | | AU | 4046397 A | 09-02-1998 |
| | | | CA | 2258673 A | 22-01-1998 |
| | | | CA | 2258674 A | 22-01-1998 |
| | | | EP | 0910901 A | 28-04-1999 |
| | | | EP | 0910902 A | 28-04-1999 |
| | | | EP | 0939906 A | 08-09-1999 |
| | | | EP | 0912947 A | 06-05-1999 |
| | | | EP | 0910903 A | 28-04-1999 |
| | | | JP | 2001502129 T | 13-02-2001 |
| | | | WO | 9802972 A | 22-01-1998 |
| | | | WO | 9802984 A | 22-01-1998 |
| | | | WO | 9802973 A | 22-01-1998 |
| | | | WO | 9802974 A | 22-01-1998 |
| | | | WO | 9802975 A | 22-01-1998 |
| | | | WO | 9802759 A | 22-01-1998 |
| | | | WO | 9802830 A | 22-01-1998 |
| | | | US | 6118808 A | 12-09-2000 |
| | | | US | 6151353 A | 21-11-2000 |
| | | | US | 5896304 A | 20-04-1999 |
| | | | US | 6028883 A | 22-02-2000 |
| | | | US | 6009118 A | 28-12-1999 |
| | | | US | 5987059 A | 16-11-1999 |
| | | | US | 5982811 A | 09-11-1999 |

EPO FORM P0459

For more details about this annex : see Official Journal of the European Patent Office, No. 12/82